# EUROPÄISCHE PATENTSCHRIFT

(11) **EP 0 447 830 B1**
(45) Veröffentlichungstag und Bekanntmachung des Hinweises auf die Patenterteilung: **11.05.1994**
(21) Anmeldenummer: 91102614.4
(22) Anmeldetag: 22.02.1991
(51) Int. Cl.: B01D 27/06, B01D 35/02, B01D 27/08

(54) **Filter für Flüssigkeiten**
Filter for liquids
Filtre pour liquides

(30) Priorität: 23.03.1990 DE 4009344
(43) Veröffentlichungstag der Anmeldung: 25.09.1991
(73) Patentinhaber: KNECHT FILTERWERKE GMBH, D-70376 Stuttgart (DE)
(72) Erfinder: Baumann, Peter, W-7000 Stuttgart 80 (DE); Schneider, Horst, W-7050 Waiblingen 8 (DE); Widmann, Sigbert, W-7322 Donzdorf (DE); Pscheidt, Berthold, W-7303 Neuhausen (DE)
(74) Vertreter: Patentanwalts-Partnerschaft Rotermund + Pfusch

(56) Entgegenhaltungen:
- DE-A- 3 514 778
- GB-A- 760 736
- US-A- 3 217 942

## Beschreibung

Die Erfindung betrifft einen Filter für Flüssigkeiten, insbesondere für Kraftstoff oder Schmieröl für einen Verbrennungsmotor, nach dem Oberbegriff des Anspruchs 1.

Ein derartiger Brennstoffilter ist aus der DE-B 12 67 029 bekannt. Bei diesem Filter liegt die mit einer mittigen Aussparung versehene Endscheibe des Filtereinsatzes mit ihrem Innendurchmesser an einem ringförmigen Stutzen des Filtergehäuses an. Um den Filtereinsatz an dieser Stelle gegenüber dem Filtergehäuse abzudichten ist entweder eine zusätzliche Ringdichtung vorgesehen oder die Endscheibe an ihrem Innenumfang mit einem nach oben gerichteten Ringflansch versehen, der die gleitende Ringdichtung zwischen dem Filtereinsatz und dem Stutzen des Filtergehäuses bewirkt.

Gemäß einem Ausführungsbeispiel in der DE-A 24 29 474 weist bei einer Filterpatrone die an einem Stutzen des Filtergehäuses anliegende Endscheibe auf ihrem inneren Umfang eine als Ringflansch ausgebildete Dichtlippe auf, die unter Eigenspannung am Stutzen des Filtergehäuses anliegt. Eine weitere am Außenumfang der Endscheibe angebrachte Dichtlippe stützt sich unter axial wirkender Eigenspannung am Gehäuseboden ab.

Nachteilig an diesen Ausführungen ist, daß entweder eine zusätzliche Dichtung vorgesehen werden muß, bzw., daß der an der Endscheibe vorgesehene Ringflansch nur ohne besondere Anpreßkraft an dem Stutzen des Filtergehäuses anliegt, wodurch eine gute und dauerhafte Dichtwirkung nicht gewährleistet ist.

Aufgabe der vorliegenden Erfindung ist es daher, einen derartigen Filter so auszubilden, daß eine dauerhafte Abdichtung zwischen Filtereinsatz und Filtergehäuse mit konstruktiv einfachen und kostengünstigen Mitteln erreichbar ist.

Gelöst wird diese Aufgabe durch eine Ausbildung des Filters nach den Merkmalen des kennzeichnenden Teils des Anspruchs 1.

Mit einer derartigen Ausführung ist durch die Verwendung eines in Flüssigkeiten quellbaren Kunststoffes für die Endscheiben eine ausreichende Abdichtung zwischen Filtereinsatz und Filtergehäuse erreicht. Die Dichtwirkung tritt dabei dadurch ein, daß der Kunststoff der Endscheibe beim Aufquellen an einer Ausdehnung nach radial außen gehindert wird, wodurch sich das Quellen auch nach radial innen auswirkt und zu der dort gewünschten dichten Anlage an dem zentralen Stutzen führt.

Vorteilhafte Ausgestaltungen nach der Erfindung sind in den Unteransprüchen enthalten.

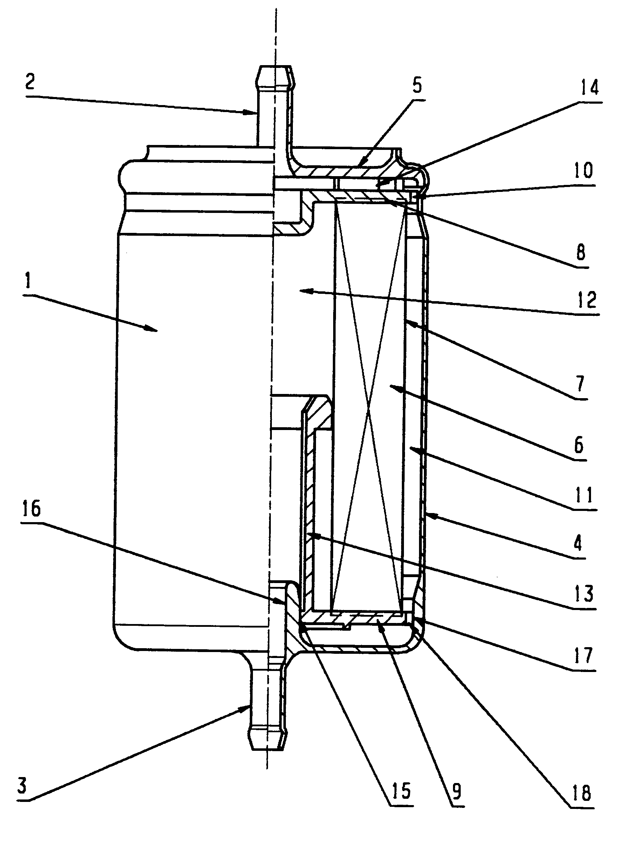

Ein Ausführungsbeispiel ist in der Zeichnung dargestellt und wird nachfolgend im einzelnen beschrieben.

Ein Kraftstoffilter 1, der über Anschlußstutzen 2, 3 an eine Kraftstoffleitung (nicht gezeichnet) angeschlossen werden kann, besteht aus einem Filtergehäuse 4 und einem Filtergehäusedeckel 5 aus Aluminium, die durch Schweißen fest miteinander verbunden sind.

Ein im Inneren des Filtergehäuses 4 gelagerter Papier-Filtereinsatz 6 umfaßt ein ringförmiges, sternförmig gefaltetes Papierband 7, das mit seinen Enden in einer oberen 8 und einer unteren Endscheibe 9 aus Kunststoff einplastifiziert ist. Die obere, scheibenfömig ausgebildete Endscheibe 8 weist an ihrem Außenumfang Aussparungen 10 auf, damit der durch den Anschlußstutzen 2 des Filtergehäusedeckels 5 zugeführte Kraftstoff in den Rohraum 11 des Kraftstoffilters 1 gelangt. Zur Abstützung des sternförmig gefalteten Papierbandes 7 sind an der unteren Endscheibe 9 in den Reinraum 12 ragende Rippen 13 angeformt. Zur Abstützung des Papier-Filtereinsatzes 6 an dem Filtergehäusedeckel 5 ist ein umlaufender Nocken 14 an der Außenseite der oberen Endscheibe 8 angeformt.

Die untere Endscheibe 9 ist mit einer mittigen Ausnehmung versehen und liegt mit ihrem Innenumfang 15 dichtend an einem ringförmig umlaufenden Stutzen 16 des Filtergehäuses 4 an. Die untere Endscheibe 9 liegt mit ihrem Außenumfang 17 unter Vorspannung an der Innenwand des Filtergehäuses 4 an, so daß eine sichere Abdichtung zwischen Filtereinsatz 6 und Filtergehäuse gewährleistet ist. Im aufgezeigten Ausführungsbeispiel sind auf dem Außenumfang 17 der unteren Endscheibe 9 halbkreisförmig ausgebildete Ausnehmungen 18 angebracht, so daß nur die zwischen diesen Ausnehmungen 18 stehengebliebenen Wandabschnitte direkt am Filtergehäuse 4 anliegen. Hierdurch werden insbesondere die beim Quellen des Kunststoffes in der Endscheibe auftretenden Kräfte besser aufgenommen.

Als Werkstoff für die Endscheiben 8, 9 wird ein in dem Kraftstoff quellender Kunststoff, insbesondere Polypropylen verwendet, wobei dessen Quellwert ca. 9% beträgt.

Mit einem derartigen Filter wird durch Verwendung eines in Flüssigkeiten quellbaren Kunststoffes für die Endscheiben des Filtereinsatzes, wobei die eine Endscheibe 9 einerseits mit ihrem Innenumfang 15 dichtend an dem Stutzen 16 des Filtergehäuses und andererseits mit ihrem Außenumfang 17 an der Innenwandung des Filtergehäuses abgestützt anliegt, auf konstruktiv einfache Weise eine dauerhafte Abdichtung zwischen Filtereinsatz 6 und Filtergehäuse 4 gewährleistet.

## Patentansprüche

1. Filter für Flüssigkeiten, insbesondere für Kraftstoff oder Schmieröl für einen Verbrennungsmotor, mit einem in einem Filtergehäuse gelagerten ringförmigen Filtereinsatz, mit mindestens einer ringförmigen, radial innen dicht auf einem Stutzen des Filtergehäuses aufsitzenden Filtereinsatz-Endscheibe,
dadurch **gekennzeichnet**,
daß diese mindestens eine Endscheibe (9) aus unter der Flüssigkeit aufquellendem einen Quellwert von 1 - 10 % besitzenden Kunststoff besteht und radial außen über den gesamten Umfang (17) im wesentlichen kraft- und formschlüssig so an dem Filtergehäuse (4) anliegt, daß durch die beim Aufquellen des Materials der Endscheibe (9) auftretenden, radial wirkenden Kräfte, der Innenumfang der Endscheibe (9) verstärkt dichtend am Stutzen des Filtergehäuses anliegt.

2. Filter nach Anspruch 1,
dadurch **gekennzeichnet**,
daß die Endscheibe (9) an ihrem Außenumfang (17) Aussparungen (18) aufweist.

3. Filter nach Anspruch 2,
dadurch **gekennzeichnet**,
daß die Ausnehmungen (18) halbkreisförmig ausgebildet sind.

4. Filter nach einem der vorhergehenden Ansprüche,
dadurch **gekennzeichnet**,
daß die Endscheiben (8, 9) aus Polypropylen als quellbarem Kunststoff, bestehen.

## Claims

1. Filter for liquids, in particular for fuel or lubricating oil for an internal combustion engine, with an annular filter element mounted in a filter housing, with at least one annular filter element end disc which radially on the inside is seated hermetically on a socket of the filter housing, characterised in that this at least one end disc (9) consists of synthetic material which swells up in the liquid and has a swelling value of 1 to 10% and radially externally bears over the entire periphery (17) substantially frictionally and positively on the filter housing (4) so that due to the radially acting forces occurring at the time of swelling-up of the material of the end disc (9), the inner periphery of the end disc (9) bears with an increased sealing action against the socket of the filter housing.

2. Filter according to Claim 1, characterised in that on its outer periphery (17) the end disc (9) comprises recesses (18).

3. Filter according to Claim 2, characterised in that the recesses (18) are constructed to be semicircular.

4. Filter according to one of the preceding Claims, characterised in that the end discs (8, 9) consist of polypropylene as the synthetic material which is able to swell.

## Revendications

1. Filtre pour liquides, pour un carburant ou lubrifiant d'un moteur à combustion interne, notamment, avec un élément filtrant en forme d'anneau, logé dans un boîtier de filtre, avec au moins une plaque d'extrémité de l'élément filtrant, en forme d'anneau et s'appuyant hermétiquement, dans le sens radial interne, sur une tubulure du boîtier de filtre, caractérisé en ce que cette plaque d'extrémité (9), au moins, se compose d'une matière plastique d'un indice de gonflement de 1 à 10%, gonflant sous l'effet du liquide, et s'applique dans le sens radial externe, sur la totalité de son pourtour (17), sur le boîtier de filtre (4), essentiellement par force d'adhérence et mécanique, de sorte que le pourtour interne de la plaque d'extrémité (9) s'applique avec une étanchéité renforcée sur la tubulure du boîtier de filtre, par les forces radiales exercées lors du gonflement de la matière de la plaque d'extrémité (9).

2. Filtre suivant la revendication 1, caractérisé en ce que la plaque d'extrémité (9) présente des évidements (18) sur son pourtour externe (17).

3. Filtre suivant la revendication 2, caractérisé en ce que les évidements (18) sont réalisés en forme de demi-cercle.

4. Filtre suivant l'une quelconque des revendications précédentes, caractérisé en ce que les plaques d'extrémité (8, 9) se composent de polypropylène, comme matière plastique gonflable.
